# EUROPEAN PATENT APPLICATION

(11) **EP 1 175 989 A2**
(43) Date of publication of application: **30.01.2002**
(21) Application number: 01306404.3
(22) Date of filing: 26.07.2001
(51) Int. Cl.: B29C 45/76

(54) **Mold condition detecting device and method for injection molding machine**

(30) Priority: 26.07.2000 JP 2000224761
(71) Applicant: Fanuc Ltd, Minamitsuru-gun, Yamanashi 401-0597 (JP)
(72) Inventor: Kamiguchi, Masao, Minamitsuru-gun, Yamanashi 401-0301 (JP); Uchiyama, Tatsuhiro, Shizuoka 412-0026 (JP); Kobayashi, Minoru. Room 11-601, Minamitsuru-gun, Yamanashi 401-0051 (JP); Komiya, Shingo, Tsuru-shi, Yamanashi 402-0001 (JP)
(74) Representative: Billington, Lawrence Emlyn

(57) **Abstract**

The invention provides a device and a method for detecting condition of molds (m1, m2) attached to an injection molding machine with low cost and high reliability. A load exerted on a product ejecting mechanism (7) or a mold opening/closing mechanism (4, 5, m1, 6) is preferably estimated by a disturbance torque estimating observer. An index value (for example a maximum value or average value) of the load is obtained and stored preferably in each molding cycle of the injection molding machine. Obtained values of the index are suitably displayed as a graph on a display device to indicate variation of the load in time series and thus allow an operator to monitor the condition of the molds.

## Description

The present invention relates to an injection molding machine and particularly to a device and a method for detecting condition of molds attached to the injection molding machine.

Condition of various mechanisms of an injection molding machine is often judged on the basis of malfunction of the mechanisms and variant sounds sensed by an operator. There is known a mold protection method in which a disturbance load estimating observer is incorporated into a servo control system for driving a mold clamping mechanism and a disturbance load is calculated by the observer to detect an abnormal load on the molds in closing the molds, as disclosed in Japanese Patent Laid-open Publication No. 4-368832. However, in this mold protecting method, a condition in which an abnormal load is caused by a foreign matter remaining between the molds in mold closing operation is detected. Particularly, it is detected whether or not the mold clamping operation in one molding cycle is carried out normally.

As described, since the judgement on whether the condition of the molds are normal or not is conventionally made on the basis of senses of an operator operating in the vicinity of the injection molding machine, a criterion of judgement is different depending on individual operator to cause a damage on the molds when the variant sound is detected by an operator. Further, the mold protection function is for detecting abnormality of operation in the molding cycle and not for detecting the condition of the molds such as time series change.

In order to stabilize the injection molding operation, it is necessary to grasp the state of the molds. Mechanical deterioration of the molds due to temperature variation and abrasion, and chemical deterioration due to gas produced from resin material make the molds condition change. When the molds are used for a long time, aged deterioration occurs in the molds by the foregoing causes. For detecting the aged deterioration, it can be conceived to indirectly judge the condition of the molds based on the change of physical amount in time detected by sensors such as a pressure sensor or a temperature sensor attached to the molds. However, this method implies problems of reliability of sensors and cost for detection and thus is not practical.

It is desirable to provide a device and a method for detecting a condition of molds attached to an injection molding machine with low cost and high reliability without any additional detecting device or sensor.

A mold condition detecting device according to one aspect of the present invention comprises: load detecting means for detecting a load exerted on a product ejecting mechanism for ejecting a product for the molds or a mold opening/closing mechanism for opening and closing the molds in operation; means for obtaining a value of an index of the load detected by the load detecting means in a whole stroke or in a predetermined range within the whole stroke of the product ejecting mechanism or the mold opening/closing mechanism; storing means for storing values of the index in a plurality of molding cycles of the injection molding machine; and indicating means for indicating variation of the load in time series based on the values of the index stored in the storing means so that the condition of the molds is monitored.

The indicating means may display variation of said index as a graph on a display device of the injection molding machine.

The mold condition detecting device may further comprise setting means for setting an allowable range of said index, and notifying means for notifying deviation of the load when the index deviates from the allowable range based on a comparison of the value of the index with the set allowable range.

The notifying means may notify deviation of the load when the index deviates form the allowable range in successive predetermined molding cycles, or for predetermined times in a predetermined time period or in predetermined molding cycles.

The mold condition detecting device may further comprise a personal computer connected therewith through connection means, and the storing means and the indicating means are provided in the personal computer and the values of the index are sent to the personal computer to be stored therein, so that the condition of the molds is monitored based on the values of the index stored in the personal computer. In this case, the indication means may display variation of the index as a graph on a display device of the personal computer.

The present invention in a further aspect also provides a method of detecting a condition of molds attached to an injection molding machine to be carried out by the mold condition detecting device as described.

Reference will now be made, by way of example, to the accompanying drawings, in which:
FIG. 1 is a block diagram of a mold condition detecting device for an injection molding machine according to one embodiment of the present invention;
FIG. 2 is a flowchart of processing for obtaining a maximum value (peak value) of a load, as an index thereof, exerted on a product ejecting mechanism;
FIG. 3 shows a table for storing maximum values of the load in forward and backward motions of an ejector of the product ejecting mechanism at every molding cycle;
FIG. 4 shows displayed graphics showing variation of the index of the load for monitoring the condition of the molds and for setting alert levels of the index;
FIG. 5 is a flowchart of processing for issuing an alert when the load deviates from the set range;
FIG. 6 is a flowchart of processing for issuing an alert when the load deviates from the set range in a series of molding cycles;
FIG. 7 is a flowchart of processing for issuing an alert when the load deviates from the set range in a series of molding cycles within a set period of time;
FIG. 8 is a flowchart of processing for obtaining an average value as an index of the load; and
FIG. 9 is a flowchart of processing for issuing an alert when the load deviates from a set range by means of a personal computer connected to a controller of the injection molding machine.

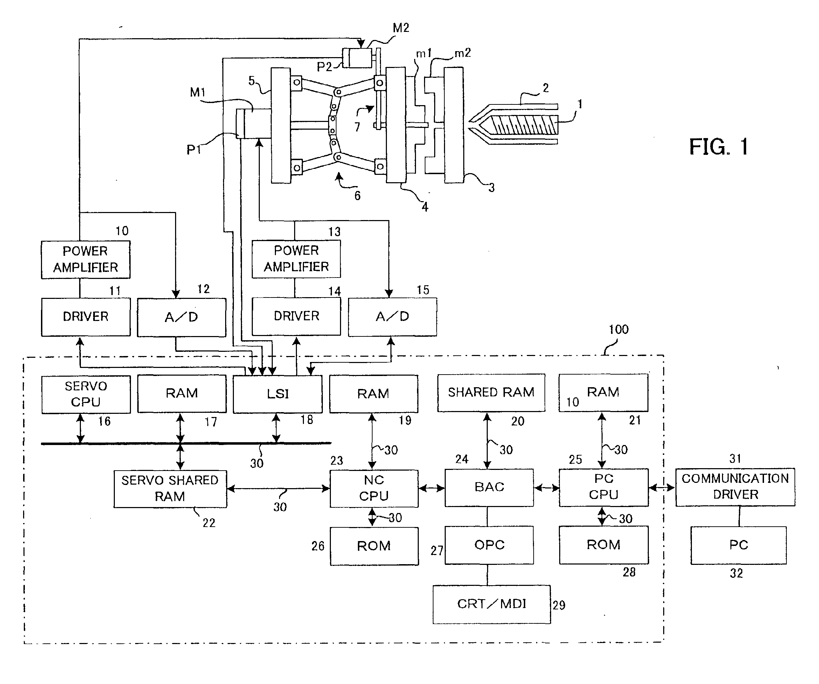

As shown in FIG. 1, an injection molding machine has a screw 1 arranged in a heating cylinder 2, and molds m1 and m2 are attached to a stationary platen 3 and a movable platen 4, respectively. The molds m1 and m2 are opened/closed and clamped by a mold opening/closing and clamping mechanism comprising the movable platen 4, a rear platen 5, a servomotor M1 arranged on the rear platen 5 and a toggle mechanism 6. The movable platen 4 is moved by the servomotor M1 through the toggle mechanism 6 in an axial direction thereof to open/close and clamp the molds. A position/velocity detector P1 such as a pulse coder is provided at an output shaft of the servomotor M1. A product ejecting mechanism 7 for ejecting a molded product from the opened molds is provided at the movable platen 4. An ejector servomotor M2 for driving the product ejecting mechanism 7 is arranged at the movable platen 4 and a position/velocity detector P2 such as a pulse coder is provided at the ejector servomotor M2.

A controller 100 for controlling the injection molding machine has a CPU 23 for NC (numerical control) and a CPU 25 for PC (programable control). The NC CPU 25 is connected with a ROM 26 storing a control program and a RAM 19 for temporary storage of data through a bus 30, and the PC CPU 25 is connected with a ROM 28 storing a sequence program and a RAM 21 for temporary storage of data through the bus 30. A BAC (bus arbiter controller) 24 is connected with a shared RAM 20, the NC CPU 23 and the PC CPU 25 through the bus 30 so as to control the bus for use. The shared RAM 20 stores NC programs and various set values associated therewith, which are accessible by the NC CPU 23 and the PC CPU 25. The BAC 34 is connected with a CRT/MDI unit 29 having a display device and an input device, through an operator panel controller 27.

A CPU 16 for servo controlling output torques, velocities and positions of the respective servomotors of the injection molding machine is connected with a RAM 17 for temporary storage of data, an input/output circuit 18 and a servo shared RAM 22 storing control programs for servo control through the bus 30, and the servo shared RAM 22 is connected with the NC CPU 23 through the bus 30.

Power amplifiers 10 and 13 are connected to the input/output circuit 18 through drivers 11 and 14, respectively and the ejector servomotor M2 is driven by an output of the power amplifier 10 and the servomotor M1 for mold opening/closing and clamping is driven by an output of the power amplifier 13. The outputs of the power amplifiers 10 and 13, i.e., driving currents for the ejector servomotor M2 and the mold opening/closing servomotor M1 are converted into digital data by A/D converters 12 and 15, respectively and inputted to the input/output circuit 18. The outputs of the position/velocity detectors P1 and P2 are also inputted into the input/output circuit 18. The controller 100 is connectable with a personal computer 32 through a communication driver 31.

With the above described arrangement, when an operation of the injection molding machine is started, the PC CPU 25 in the controller 100 performs a sequential control based on the sequential program stored in the ROM 28, and the NC CPU 23 controls respective operations of the injection molding machine based on the NC program stored in the shared RAM 20 to output motion commands for the respective servomotors to the shared RAM 22 to be stored therein. The servo CPU 16 performs the position control, velocity control and torque control for the servomotors of the respective axes. For example, when a motion command for closing the molds is issued to the servo shared RAM 22, the servo CPU 16 obtains a position deviation based on the motion command and a feedback signal from the position/velocity detector P1 and obtains a velocity command by multiplying the position deviation by a position gain and obtains a velocity deviation by subtracting a present velocity of the servomotor M1 detected by the position/velocity detector P1 from the velocity command and performs velocity loop processing to obtain a current command as a torque command. Current loop processing is performed based on the current command and a value of an actual driving current from the A/D converter 15 through the input/output circuit 18, to issue a command to the power amplifier 13 through the input/output circuit 18 and the driver 11 to thus drive the servomotor M1 for the mold opening/closing and clamping. The remaining servomotors are controlled in the same manner.

Embodiments of the present invention enable monitoring of a condition variation of the molds in time series, which is effected by a mechanical change of the molds m1 and m2 due to temperature change and abrasion and further chemical change due to gas produced from the resin material, based on a load exerted on the servomotor M1 for driving the mold opening/closing and clamping mechanism or a load exerted on the ejector servomotor M2 for driving the product ejecting mechanism 7 in the above described arrangement of the injection molding machine and the controller therefor.

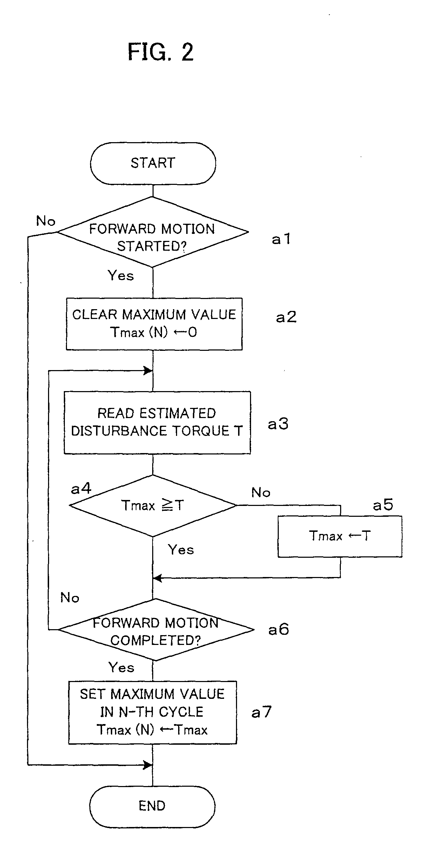

FIG. 2 shows a flowchart of processing to be executed by the PC CPU 25 for detecting the maximum value (peak value) of the load exerted on the ejector servomotor M2 in one molding cycle.

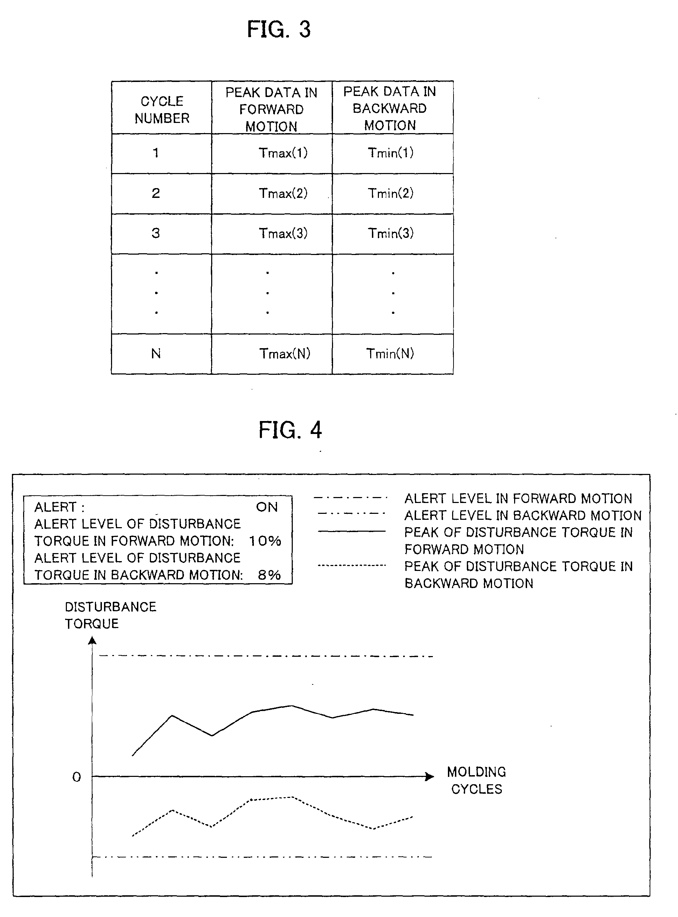

The controller 100 controls a molding operation, each cycle thereof including measuring, mold closing, mold clamping, injection, pressure holding and cooling, mold opening and product ejecting processes, in the conventional manner. When a command for moving an ejector of the ejecting mechanism 7 forward is issued, the servo CPU 16 drives the ejector servomotor M2 through the input/output circuit 18, the driver 11 and the power amplifier 10. When the PC CPU 25 detects a start of the forward motion of the ejector (Step a1), the PC CPU 25 clears data in a table for storing maximum values (peak data) of the load torque in forward motions (and also backward motions) of the ejector in respective molding cycles, as shown in FIG. 3 (Step a2). The peak data are stored in this table in a manner of sifting the stored data and deleting the oldest data to add the newest data, so that the latest data of set number of shots (molding cycles) are stored.

As means for detecting the load exerted on the servomotor M2, processing of a disturbance estimating observer is incorporated in the processing executed by the servo CPU 16. The servo CPU 16 performs the position loop and velocity loop processing for each driving axis in every position/velocity loop processing period as described, and also performs processing of the disturbance torque estimating observer to estimate a disturbance torque. The PC CPU 25 reads the disturbance torque (load) T of the ejector servomotor M2 estimated by the processing of the disturbance estimating observer by the servo CPU 16 (Step a3). The processing of the disturbance estimating observer is well known in the art as exemplified by a disclosure in Japanese Patent Laid-Open Publication No. 4-368832, and is not described in detail here.

The estimated disturbance torque T is compared with the maximum torque Tmax stored in a register for storing the maximum torques (Step a4). Data "0" is stored in this register in an initial setting. If it is determined that the estimated disturbance torque T is greater than the maximum torque Tmax, the estimated disturbance torque T is stored in the resister as the maximum torque Tmax in the present molding cycle (Step a5). If it is determined that the maximum torque Tmax is equal or greater than the estimated disturbance torque T, the resister holds the present value.

Then, it is determined whether the forward motion is completed or not (Step a6). If it is determined that the forward motion is not completed, the procedure returns to Step a3 to read the estimated disturbance torque at every predetermined period and repeatedly executes the processing of obtaining the maximum value Tmax of the estimated disturbance torque. When the forward motion is completed, the procedure proceeds from Step a6 to Step a7 where the maximum value Tmax is stored at a position Tmax(N) for N-th molding cycle (shot) in the table for storing the maximum values of the estimated disturbance torque, as shown in FIG. 3.

Subsequently, the above-described processing of FIG. 2 is executed at every forward motion of the ejector in every molding cycle (shot) to store the maximum values of the estimated disturbance torques in the forward motions of the ejector in a series of molding cycles, i.e. the maximum load data (peak data) Tmax(1) -Tmax(N), as shown in FIG. 3.

In the similar manner, the maximum load data in the backward motions of the ejector are obtained. In this case, since a direction of motion of the ejector is inverse to that of the forward motion, the maximum load data in the backward motion are indicated as Tmin(1)-Tmin(N) in the table shown in FIG. 3. Although the processing for obtaining maximum load data (peak data) Tmin(1)-Tmin(N) in the backward motions of the ejector is not shown as a flowchart, this process can be executed by replacing Tmax with Tmin, substituting "FORWARD MOTION START?" for "BACKWARD MOTION START?" in Step a1 and "FORWARD MOTION COMPLETED?" for "BACKWARD MOTION COMPLETED?" in Step a6.

Thus, the maximum values of the disturbance torque in forward and backward motions of the ejector in the recent N molding cycles are obtained and stored. In this state, a command for displaying a the data for monitoring the condition of the molds, the PC CPU 25 graphically displays the maximum values Tmax(1)-Tmax(N) and Tmin(1)-Tmin(N) of the disturbance torque in the forward and backward motions with an axis of abscissa indicating the number of molding cycles and with an axis of ordinate indicating the maximum value of the disturbance torque on a display device of the CRT/MDI device 29, as shown in FIG. 4. In this embodiment, the variation of the maximum value of the disturbance torque is indicated by the display as a graph, however this variation may be displayed as the table shown in FIG. 3 by means of numerical data of the maximum data (peak data).

The variation of condition of the molds in time series caused by the mechanical change and the chemical change can be monitored and detected by observing the variation of the maximum disturbance torque (maximum load) exerted on the ejector servomotor M2 for driving the product ejecting mechanism in the series of molding cycles. Thus, the maximum disturbance torque (maximum load) is used as an index of the load exerted on the servomotor M2 and the index of the load on the servomotor M2 is used as a basis of evaluation of the condition of the molds. Minute deformation of the molds and fine cracks on inner surfaces of the molds are reflected in the product formed by the molds and the load exerted on the ejector servomotor M2 in ejecting the product varies dependent on the condition of the inner surface of the molds abutting the product. Thus, the condition of the molds can be monitored and detected on the basis of the variation of the load exerted on the ejector servomotor M2.

Further, an allowable range of the index (maximum disturbance torque) may be set taking into consideration the variation of the maximum disturbance torque on the ejector servomotor M2. Particularly, a level for alerting increase of the load is set and an alert is issued for notifying an operator of the increased load when the maximum disturbance load exceeds the level. FIG. 4 shows an example of a displayed screen in which an alert level for a forward motion of the ejector and an alert level for a backward motion of the ejector are respectively set and an alert function is set ON. An alert is issued when the maximum disturbance torque deviates from the range defined by the alert levels in each molding cycle. In FIG. 4, the alert level for the forward motion is set to a value greater than the greatest value of the maximum disturbance torque by 10%, and an absolute value of the alert level for the backward motion is set to a value greater than the absolute value of the greatest value of the maximum disturbance torque in backward motions by 8%.

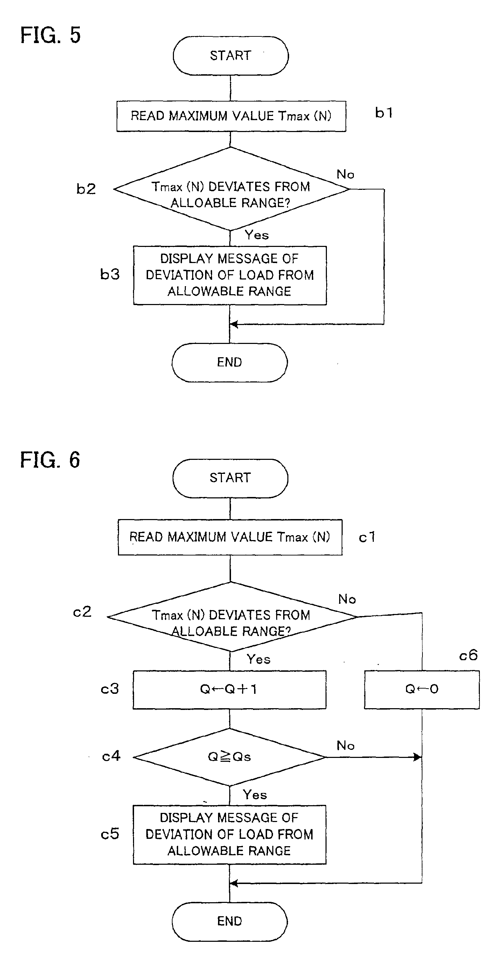

After the allowable range defined by the alert levels is set and the alert function is set ON, the PC CPU 29 executes processing for alerting an operator to an excessive increase of the load in every molding cycle. FIG. 5 shows the alert processing based on the maximum value Tmax of the estimated disturbance torque. This processing is executed after the step of obtaining the maximum value Tmax of the estimated disturbance torque in each forward motion of the ejector as shown in FIG. 2, or after completion of each molding cycle.

First, the maximum value Tmax(N) obtained in the present molding cycle N is read (Step b1) and it is determined whether or not the maximum value Tmax(N) deviates form the set allowable range, i.e., outside of the set alert levels (Step b3). If the maximum value Tmax(N) deviates form the set allowable range, a message for indicating the load deviates from the set allowable range is displayed on the display device of the CRT/MDI 29 (Step b3).

Further, the processing similar to that shown in FIG. 5 is executed with respect to the maximum value Tmin(N) in the backward motion of the ejector. This processing can be executed by substituting reading of the maximum value Tmin(N) in step b1 for reading of the maximum value Tmax(N) and by comparing the maximum value Tmin(N) with the set level for backward motion at Step b2.

In the foregoing embodiment, when either the maximum value Tmax(N) in the forward motion or the maximum value Tmin(N) in the backward motion exceeds the associated alert level, an alert is displayed. Alternatively, an alert may be displayed only when both the maximum value Tmax(N) and the maximum value Tmin(N) exceeds the associated alert levels. In this case, it is determined whether or not the maximum value Tmin(N) exceeds its alert level only when the maximum value Tmax(N) is determined to exceed its alert level.

Furthermore, a case in which either the maximum value Tmax(N) or the maximum value Tmin(N) is determined to exceed the associated alert level in one molding cycle may be considered to occur incidentally, and therefore it may be inappropriate to issue an alert to notify an operator of an undesirable condition of the molds on the basis of the determination in one molding cycle. Thus, the judgement may be made on the basis of determinations in a plurality of molding cycles.

FIG. 6 shows the processing for displaying an alert when the maximum value Tmax(N) exceeds the set alert level not less than set Qs times successively in a series of molding cycles.

The maximum value Tmax(N) of the estimated disturbance torque T in the forward motion of the ejector is read (Step c1) and if it is determined that the maximum value Tmax(N) exceeds the set alert level (Step c2), a counter for counting times Q of exceeding the alert level is increased by "1" (Step c3). The value of the counter has been set to "0" in an initializing process. Then, it is determined whether or not the counter value Q is equal or greater than set times Qs (Step c4) and if the counter value Q is determined to be smaller than the set times Qs, the procedure terminates. In Step c2, if it is determined that the maximum value Tmax(N) does not exceed the set alert level, the value Q of the counter is cleared to "0" (Step c6) and the procedure terminates.

Thus, the value Q of the counter is increased over the value "1" only when the maximum value Tmax(N) deviates the allowable range in the successive molding cycles since the counter is cleared to "0" if the maximum value Tmax(N) in each molding cycle does not deviate form the allowable range. When the value Q of the counter is equal or greater than the set value Qs, an alert message indicating the load deviates the allowable range is displayed on the display device (Step c5).

Also, the processing similar to that in FIG. 6 is executed with respect to the maximum value Tmin(N) in the backward motion of the ejector, and if the T min(N) exceeds the set alert level set times Qs successively in successive molding cycles, an alert message is displayed on the display device. An alert message may be displayed only when both the maximum value Tmax (N) in the forward motions and the maximum value Tbman(N) in the backward motions deviate from the allowable range for set times Qs successively in successive molding cycles.

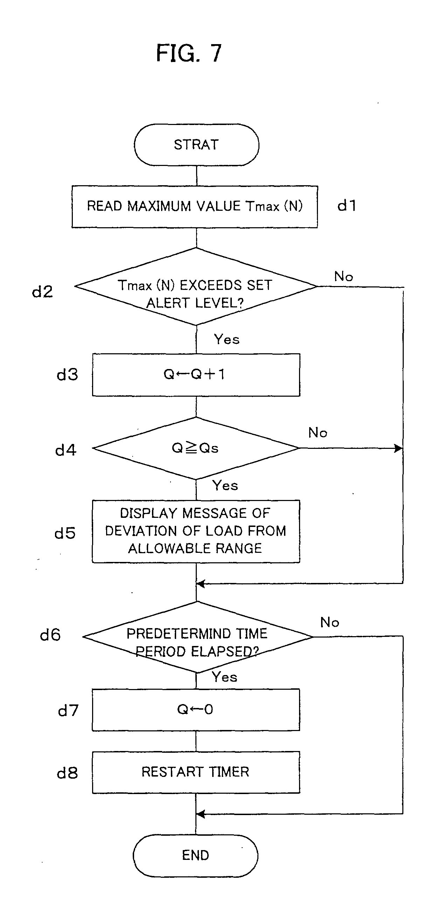

FIG. 7 shows processing for displaying an alert message when the maximum value Tmax(N) of the estimated disturbance torque exceeds the set alert level not less than set times within a set time period.

The maximum value Tmax(N) of the disturbance torque estimated by the observer in the forward motion of the ejector is read (Step d1) and it is determined whether or not the maximum value Tmax(N) exceeds the set alert level (Step d2). If the maximum value Tmax(N) does not exceed the alert level, it is further determined whether or not a timer measures a predetermined time period which has been set in the initial setting (Step d6). If the predetermined time period has not elapsed, the procedure terminates. Subsequently, every time when one molding cycle or the forward motion of the ejector in one molding cycle is completed, Steps d1, d2 and d6 are executed and if it is determined that the predetermined time period has elapsed, a valuer Q of a counter for storing the number of times that the maximum value Tmax(N) exceeds the set alert level is set to "0" (Step d7). Then, the timer is reset to measure elapse of the predetermined time period and restarted (Step d8).

Every time when the predetermined time period elapses, the counter counting the number of times of exceeding the alert level is cleared and the timer is restarted, and Steps d1, d2, d6-d8 are repeatedly executed. When it is determined that the maximum value Tmax(N) of the estimated disturbance torques exceeds the alert level in Step d2, the counter for counting the number of times of exceeding the alert level is increased by "1" (Step d3) to store the number of times Q of exceeding the alert level. Then, it is determined whether or not the number of times Q is equal or greater than a set number of times Qs (Step d4) and if the number of times Q is smaller than the set number of times Qs, the procedure proceeds to Step d6. If the number of times Q is equal or greater than the set number of times Qs, a message indicating that the load deviates from the allowable range is displayed on the display device (Step d5).

As described, since every time when the predetermined time period has elapsed, the counter for counting the number of times Q of exceeding the alert level is cleared and the timer is restarted, an alert message is displayed when the number of times that the maximum value Tmax(N) deviates from the allowable range reaches the set number of times Qs before the timer is restarted, i.e. within the predetermined time period.

Further, in the example shown in FIG. 7, an excessive load is detected on the basis of the number of times that the maximum value Tmax(N) deviates from the set allowable range in the predetermined time period. An excessive load may be detected based on the number of times that the maximum value Tmax(N) deviates from the set allowable range in predetermined molding cycles. In this case, a counter for counting the number of molding cycles is substituted for the timer and it is determined whether or not the counter reaches a set number in Step d6, and if the counter reaches the set number, the counter is cleared in Step d8 after the processing of Step d7. Additional processing of increasing the counter by "1" is provided in Step d1.

Also, the processing similar to that in FIG. 7 is executed with respect to the maximum value Tmin(N) in the backward motion of the ejector so as to detect that the maximum value Tmin(N) exceeds the set alert level.

Further, an alert message may be displayed only when both the number of deviations of the maximum value Tmax (N) in the forward motions and the number of deviations of the maximum value Tmin(N) in the backward motions from the allowable range are respectively equal or greater than predetermined numbers.

Thus, when an alert message indicating the load deviates form the allowable range is displayed on the display device, the data of Tmax(1)-Tmax(N) and/or Tmin(1)-Tmin(N) are also displayed on the display device as shown in FIG. 4, to allow an operator to judge the condition of the molds by analyzing whether the excessive load is caused incidentally or significantly.

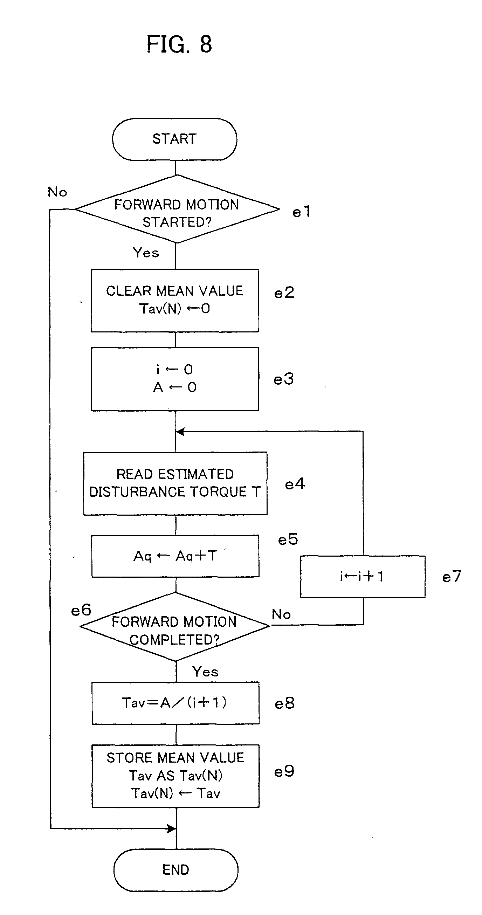

In the foregoing embodiments, the maximum load (disturbance torque) is adopted as an index of the load exerted on the servomotor M2 in forward and backward motions of the ejector, ultimately as a criterion of condition of the molds. An average value of the load (disturbance torque) in a forward motion or a backward motion of the ejector may be adopted as the index. The processing of obtaining the average value is shown in FIG. 8.

When a forward motion of the ejector is detected (Step e1), a value stored at a position for the present molding cycle in a table for storing an average value Tav(N) of the estimated disturbance torque in a forward motion of the ejector in each molding cycle is cleared (Step e2). A counter i for counting the number of values of the estimated disturbance torque is cleared and an accumulator Aq for summing the values of the estimated disturbance torque is cleared (Step e3). Then, the disturbance torque T estimated by the observer is read (Step e4) and added to the accumulator Aq (Step e5). It is determined whether the forward motion of the ejector is completed or not (Step e6) and if the forward motion is not completed, the counter i is increased by "1" (Step e7) and the procedure returns to Step e4. Subsequently, the processing of Steps e4-e7 is repeatedly executed to sum the values of the estimated disturbance torque T.

If it is determined that the forward motion of the ejector is completed in Step e6, the value of the accumulator Aq is divided by a number obtained by adding "1" to the value of the counter i, to obtain an average value Tav (Step e8) and the average value Tav is written at the position of the present molding cycle in the table for storing average values (Step e9).

The table for storing the average values is constituted by substituting the average values Tav(1)-Tav(N) in the forward motions for the peak data Tmax(1)-Tmax(N) and also substituting the average values in the backward motions for the peak data Tmin(1)-Tmin(N) in the table as shown in FIG. 3.

The processing of obtaining the average values of the estimated disturbance torques in the backward motions of the ejector is executed by replacing the processing of detecting a start of a forward motion by detecting a start of a backward motion in Step e1 and the processing of determining a completion of the forward motion is replaced by determining a completion of the backward motion in Step e6 in FIG. 8, and the average value of the estimated disturbance torque in the backward motion is stored in Step e9.

In the foregoing embodiment, the processing of obtaining the maximum values (peak data) or the average values of the estimated disturbance torque (FIGS. 2, 8) as the index of the load, displaying the index data on the display device and setting of alert levels (FIG. 4) and issuing an alert of excessive load in each molding cycle is executed by the PC CPU 25. The above processing is not necessarily executed by the PC CPU 25 and all of the processing or a part of the processing may be executed by the CNC CPU 23 or the servo CPU 16. The processing may be executed by the CPU which has a capacity of processing.

Furthermore, a personal computer 32 connected to the controller 100 may be execute the above processing.

In the following embodiment, the processing of obtaining the values of the index of the load, i.e., the maximum values or the average values of the load (disturbance torque) is executed by the controller 100 and the obtained index values are transferred to a personal computer 32 to execute the processing of display and monitor of the index values, setting of the allowable range of the load, determination whether or not the load deviates from the allowable range and displaying an alert message.

In this embodiment, the processing similar to that shown in FIGS. 2 and 8 is executed by the CPU in the controller 100 with modifications that Steps a2 in FIG. 2 and Step e2 in FIG. 8 are omitted, the processing of "setting the maximum value of N-th cycle" in Step a7 is replaced by processing of "sending the maximum value of N-th cycle to the personal computer" in FIG. 2, and the processing of "setting the average value of N-th cycle" in Step e9 is replaced by "sending the average value of N-th cycle" in FIG. 8.

The table for storing the maximum values of the disturbance torque in forward and backward motions of the ejector in each molding cycle or the table for storing the average values of the disturbance torque is provided in a storage device in the personal computer 32. The values of the index of the load (maximum value or average value) are displayed on a display device of the personal computer in the form of a graph or numerals, as shown in FIG. 4. The setting of alert levels and the setting of enable or disable the alert are performed on the personal computer 32.

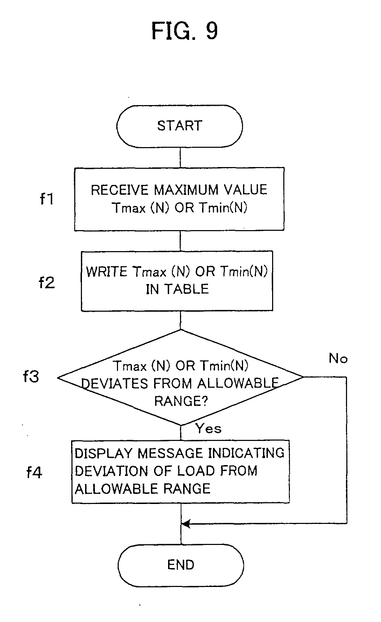

FIG. 9 shows processing of receiving the maximum values Tmax or Tmin of the estimated disturbance torque as the index of load and determining an excessive load and displaying an alert message indicating the excessive load, to be executed by the personal computer 32.

The personal computer receives the maximum value Tmax(N) or Tmin(N) of the estimated disturbance torque from the controller 100 of the injection molding machine through the communication driver 30 (Step f1). The received maximum value Tmax(N) or Tmin(N) is written cyclically at a position for the present molding cycle in the table provided in the storage in the personal computer 32, as shown in FIG. 3 (Step f2). It is determined whether or not the maximum value Tmax(N) or Tmin(N) exceeds the set alert level (Step f3). If the maximum value Tmax(N) or Tmin(N) does not exceed the set alert level, the procedure terminates. If the maximum value Tmax(N) or Tmin(N) exceeds the set alert level, a message indicating the load deviates from the allowable range is displayed on the display device of the personal computer 32 (Step f4).

The flowchart of FIG. 9 shows the processing when the alert function is set enabled, and when the alert function is set disabled the processing terminates after completion of the processing of Steps f1 and f2. In the case of adopting the average value Tav(N) of the disturbance torques instead of the maximum value Tmax(N) as the index of the load, the similar processing is executed by substituting Tav(N) for Tmax(N).

Further, in the case where the personal computer 32 executes the processing of issuing an alert by determination on the basis of a plurality of deviations of the maximum value from the allowable range as shown in FIGS. 6 and 7, an additional step of storing the maximum value Tmax(N) in the table is respectively inserted between Steps c1 and c2 in FIG. 6 and between Steps d1 and d2 in FIG. 7.

In the forgoing embodiments, the condition of the molds is detected on the basis of the load exerted on the servomotor M2 for driving the product ejecting mechanism. Alternatively, the condition of the molds may be detected on the basis of the load exerted on the servomotor M1 for driving the mold opening/closing mechanism. Minute deformation of the molds due to mechanical and chemical changes affects alignment of pins and holes provided on the molds, and the load exerted on the servomotor M1 for opening and closing the molds in operation varies dependent on the condition of the alignment of the pins and holes of the molds. Thus, the condition of the molds can be monitored and detected on the basis of the variation of the load exerted on the servomotor M1 for driving the mold opening and closing mechanism.

In this case, the processing is modified as follows; detection of start of a forward motion of the ejector in Step a1 in FIG. 2 and in Step e1 of FIG. 8 is replaced by detection of start of a closing motion of the molds, the detection of completion of the forward motion in Step a6 in FIG. 2 and in Step e6 in FIG. 8 is replaced by detection of touching of the molds m1 and m2, and the disturbance torque T of the servomotor M2 is replaced by the disturbance torque of the servomotor M1 estimated by an disturbance torque observer provided for the servomotor M1.

Further, in the foregoing embodiments, the maximum or average values of the disturbance torque as the index of the load are obtained over the whole operation stroke of the ejector or the mold opening/closing mechanism. Alternatively, a section for obtaining the index data of the load in the operation stroke may be set by specifying start and end positions of the section, and the estimated disturbance torque is obtained only for the section so as to obtain the maximum or average values. In this case, the processing in Steps a1 and e1 is replaced by processing of determining whether or not the ejector or the movable platen has reached the set start position and the processing in Steps a6 and e6 is replaced by processing of determining whether or not the ejector or the movable platen has reached the set end position.

Furthermore, in the foregoing embodiments, the value of the index of the load is obtained in every molding cycle. The value of the index may be obtained in every predetermined number of molding cycles. For example, only when the value of a shot counter counting the number of molding cycles is even number or odd number, or only when a number of last place (in decimal system) of the shot counter is a predetermined value, the processing of FIGS. 2 and 8 may be executed. Alternatively, an additional counter for counting the number of molding cycles (shots) is provided and each time when the additional counter counts a set number of molding cycles the processing of FIGS. 2 and 8 may be executed and the additional counter is cleared to obtain the index of the load in every predetermined number of molding cycles. Further, the processing of FIGS. 2 and 8 may be executed in every molding cycle but the storage of the index may be performed in every predetermined number of molding cycles.

According to the present invention, the variation of condition of the molds in time series caused by mechanical and chemical changes may be monitored on the basis of the load exerted on the servomotor for driving the product ejecting mechanism or the servomotor for driving the mold closing/opening mechanism with high reliability and low cost.

In summary, according to preferred embodiments the invention provides a device and a method for detecting condition of molds attached to an injection molding machine with low cost and high reliability. A load exerted on a product ejecting mechanism or a mold opening/closing mechanism is preferably estimated by a disturbance torque estimating observer. An index value (for example a maximum value or average value) of the load is obtained and stored preferably in each molding cycle of the injection molding machine. Obtained values of the index are suitably displayed as a graph on a display device to indicate variation of the load in time series and thus allow an operator to monitor the condition of the molds.

## Claims

1. A mold condition detecting device for detecting a condition of molds attached to an injection molding machine having a servomotor for driving a product ejecting mechanism, said device comprising:
load detecting means for detecting a load exerted on the product ejecting mechanism in operation;
means for obtaining a value of an index of the load detected by said load detecting means in a whole stroke or in a predetermined range within the whole stroke of the product ejecting mechanism;
storing means for storing values of the index in a plurality of molding cycles of the injection molding machine; and
indicating means for indicating variation of the load in time series based on the values of the index stored in said storing means so that the condition of the molds is monitored.

2. A mold condition detecting device according to claim 1, wherein said index of the load is a maximum of the detected load in the whole stroke or in the predetermined range within the whole stroke of the product ejecting mechanism.

3. A mold condition detecting device according to claim 1, wherein said index of the load is an average of the detected load in the whole stroke or in the predetermined range within the whole stroke of the product ejecting mechanism.

4. A mold condition detecting device for detecting condition of molds attached to an injection molding machine having a servomotor for driving a mold opening/closing mechanism, said device comprising:
load detecting means for detecting a load exerted on the mold opening/closing mechanism in operation;
means for obtaining a value of an index of the load detected by said load detecting means;
storing means for storing the values of the index in a plurality of molding cycles; and
indicating means for indicating variation of the load in time series based on the values of the index stored in said storing means, so that the condition of said molds is monitored.

5. A mold condition detecting device according to any of the preceding claims, wherein said indicating means displays variation of said index as a graph on a display device of the injection molding machine.

6. A mold condition detecting device according to any of the preceding claims, further comprising setting means for setting an allowable range of said index and notifying means for notifying deviation of the load when said index deviates from the allowable range based on a comparison of the value of said index with the set allowable range.

7. A mold condition detecting device according to claim 6, wherein said notifying means notifies deviation of the load when said index deviates from the allowable range in successive predetermined molding cycles.

8. A mold condition detecting device according to claim 6, wherein said notifying means notifies the deviation of the load when said index deviates from the allowable range for predetermined times in a predetermined time period or in predetermined molding cycles.

9. A mold condition detecting device according to any of the preceding claims, further comprising a personal computer connected therewith through connection means, wherein said storing means and said indicating means are provided in the personal computer and the values of said index are sent to the personal computer so that the condition of the molds is monitored based on the values of said index stored in the personal computer.

10. A mold condition detecting device according to claim 9, wherein said indicating means displays variation of said index as a graph on a display device of said personal computer.

11. A mold condition detecting device according to claim 4 or any claim dependent thereon, wherein said index of the load is a maximum or an average of the detected load in the whole stroke or in the predetermined range within the whole stroke of the mold opening/closing mechanism.

12. A method of monitoring a condition of molds attached to an injection molding machine having a servomotor for driving a product ejecting mechanism, said method comprising the steps of:
detecting a load exerting on said product ejecting mechanism in operation;
obtaining a value of an index of the detected load in a whole stroke or in a predetermined range within the whole stroke of said product ejecting mechanism;
storing values of the index in a plurality of molding cycles of the injection molding machine;
indicating variation of the load in time series based on the stored values of the index so that the condition of the molds is monitored.

13. A method of monitoring a condition of molds attached to an injection molding machine according to claim 12, wherein said index of the load is a maximum or an average of the detected load in the whole stroke or in the predetermined range of the whole stroke of the product ejecting mechanism.

14. A method of monitoring a condition of molds attached to an injection molding machine having a servomotor for driving a mold opening/closing mechanism, said method comprising the steps of:
detecting a load exerting on the mold opening/closing mechanism in operation;
obtaining a value of an index of the detected load in a whole stroke or in a predetermined range within the whole stroke of the mold opening/closing mechanism;
storing values of the index in a plurality of molding cycles of the injection molding machine;
indicating variation of the load in time series based on the stored values of the index so that the condition of the molds is monitored.

15. A method of monitoring condition of molds attached to an injection molding machine according to any preceding method claim, wherein said step of indicating variation of the load includes displaying variation of said index as a graph on a display device of the injection molding machine.

16. A method of monitoring a condition of molds attached to an injection molding machine according to any preceding method claim, further comprising the steps of setting an allowable range of said index and notifying deviation of the load when said index deviates from the allowable range based on a comparison of the value of said index with the set allowable range.

17. A method of monitoring a condition of molds attached to an injection molding machine according to any preceding method claim, further comprising a step of sending the values of said index to a personal computer to be stored therein, wherein said step of indicating variation of the load preferably includes displaying the variation of said index on a display device of the personal computer.

18. A method of monitoring condition of molds attached to an injection molding machine according to claim 14 or any claim dependent thereon, wherein said index of the load is a maximum or an average of the detected load in the whole stroke or in the predetermined range within the whole stroke of the mold opening/closing mechanism.
